# EUROPEAN PATENT APPLICATION

(11) **EP 3 438 510 A1**
(43) Date of publication of application: **06.02.2019**
(21) Application number: 17774501.5
(22) Date of filing: 21.03.2017
(51) Int. Cl.: F16J 3/02, F16F 9/04, F02M 55/02, F02M 59/44

(54) **METAL DIAPHRAGM DAMPER**

(30) Priority: 28.03.2016 JP 2016064375
(71) Applicant: Eagle Industry Co., Ltd., Minato-ku Tokyo 105-8587 (JP)
(72) Inventor: IWA Toshiaki, Tokyo 105-8587 (JP); OGAWA Yoshihiro, Tokyo 105-8587 (JP); SATO Yusuke, Tokyo 105-8587 (JP)
(74) Representative: TBK
(86) International application number: PCT/JP2017/011139
(87) International publication number: WO 2017/169960

(57) **Abstract**

Provided is a metal diaphragm damper excellent in pulse absorption performance even with enhanced pressure resistance. A diaphragm damper 1 includes a couple of diaphragms 10 and 20 joined to each other at outer edge portions 2, forming an internal space 3 in which high-pressure gas is sealed. The diaphragms 10 and 20 are each formed of a metal thin film. At least one of the diaphragms 10 and 20 has a multilayer structure with a plurality of metal thin films 11 and 12 or 21 and 22 layered and fixed at its outer edge portion 2.

## Description

### Technical Field

The present invention relates to a diaphragm damper for absorbing pulsations suitable for a location where pulsations occur in, for example, a high-pressure fuel pump or the like, and more particularly, relates to a metal diaphragm damper.

### Background Art

A pad connected to feed-water equipment to absorb pressure shock has been known which includes a pair of laminated members sealed at their peripheries, the laminated members each including synthetic resin films bonded to the inside and outside of an aluminum foil, and contains pressure gas inside (hereinafter referred to as "Conventional Art 1." See Patent Document 1, for example.).

A diaphragm damper to dampen pressure pulsations in a fluid system has been known which includes a pair of metal diaphragms by which a chamber is enclosed, containing pressure gas in the chamber (hereinafter referred to as "Conventional Art 2." See Patent Document 2, for example.).

### CITATION LIST

### PATENT DOCUMENT

Patent Document 1: JP 62-501404 W
Patent Document 2: JP 2004-138071 A

### SUMMARY OF THE INVENTION

### Problem to be Solved by the Invention

Conventional Art 1, however, is used for the prevention of water hammer, and its object is to prevent the pad from contaminating water in the feed-water equipment and to prevent the pad from being eroded by water. If the pad is used as overload prevention means under conditions where pressure changes periodically and the maximum working pressure rises to about 2 MPa, like a diaphragm damper for absorbing pulsations suitable for a location where pulsations occur in a high-pressure fuel pump or the like as in the present invention, the laminated members can be damaged, resulting in shortened life.

Conventional Art 2 is for dampening pressure pulsations in a fuel system of an internal combustion engine, and an upper diaphragm and a lower diaphragm which constitute the damper are each formed of a single-sheet metal member. The pressure resistance and pulsation absorption performance of the damper depend on the thickness, shape, and material of the single-sheet metal member. Thus, if the thickness is increased to enhance the pressure resistance, for example, the spring constant is also increased, reducing the amount of change in volume. This results in a problem that a damper with high pressure resistance and excellent pulsation absorption performance cannot be obtained.

The present invention has been made to solve these problems, and its object is to provide a metal diaphragm damper excellent in pulsation absorption performance even with the damper having enhanced pressure resistance.

### Means for Solving Problem

To attain the above object, a diaphragm damper according to a first aspect of the present invention is a diaphragm damper that includes a couple of diaphragms joined to each other at outer edge portions, forming an internal space in which high-pressure gas is sealed, in which the diaphragms are each formed of a metal thin film, and at least one of the diaphragms has a multilayer structure with a plurality of metal thin films layered and fixed at the outer edge portion thereof.

According to this aspect, when the diaphragm has the same pressure resistance as one with a single-layer structure, it can be greatly reduced in spring constant compared to the one with the single-layer structure, increasing the amount of change in volume as the diaphragm damper, and exerting the damper function sufficiently.

According to a second aspect of the present invention, in the diaphragm damper in the first aspect, the plurality of metal thin films is formed of the same type of metal.

According to this aspect, a welding operation at the outer edge portion is facilitated, and a good welded portion can be obtained.

According to a third aspect of the present invention, in the diaphragm damper in the first or second aspect, the plurality of metal thin films has the same thickness.

According to this aspect, heat can be input to the individual thin films in the same way during welding, and the welding operation can be facilitated.

According to a fourth aspect of the present invention, in the diaphragm damper in any one of the first to third aspects, the diaphragm damper has a vertical cross-sectional shape in which a distance between the couple of diaphragms is smaller at central portions than at radially outer sides.

According to this aspect, outside diameter-side shoulders can be prevented from being broken by stresses even if a high external pressure acts on the diaphragm damper.

### Effects of the Invention

The present invention achieves the following outstanding effects.
(1) In the diaphragm damper including the couple of diaphragms joined to each other at the outer edge portions, forming the internal space in which high-pressure gas is sealed, the diaphragms are each formed of the metal thin film, and at least one of the diaphragms has the multilayer structure with the plurality of metal thin films layered and fixed at the outer edge portion thereof, so that when the diaphragm has the same pressure resistance as one with a single-layer structure, it can be greatly reduced in spring constant compared to the one with the single-layer structure, increasing the amount of change in volume as the diaphragm damper, and exerting the damper function sufficiently.
(2) The plurality of metal thin films is formed of the same type of metal, so that the welding operation at the outer edge portion is facilitated, and a good welded portion can be obtained.
(3) The plurality of metal thin films has the same thickness, so that heat can be input to the individual thin films in the same way during welding, and the welding operation can be facilitated.
(4) The diaphragm damper has the vertical cross-sectional shape in which the distance between the couple of diaphragms is smaller at the central portions than at the radially outer sides, so that the radially outer shoulders can be prevented from being broken by stresses even if a high external pressure acts on the diaphragm damper.

### BRIEF DESCRIPTION OF THE DRAWINGS

FIG. 1 is a plan view showing a diaphragm damper according to a first embodiment of the present invention.
FIG. 2 is a cross-sectional view taken along A-A in FIG. 1.
FIG. 3 is a plan view showing a diaphragm damper according to a second embodiment of the present invention.
FIG. 4 is a cross-sectional view taken along B-B in FIG. 3.

### DESCRIPTION OF EMBODIMENTS

Hereinafter with reference to the drawings, a mode for carrying out this invention will be described illustratively based on embodiments. However, the dimensions, materials, shapes, relative positions, and others of components described in the embodiments are not intended to limit the scope of the present invention only to them unless otherwise explicitly described.

### First Embodiment

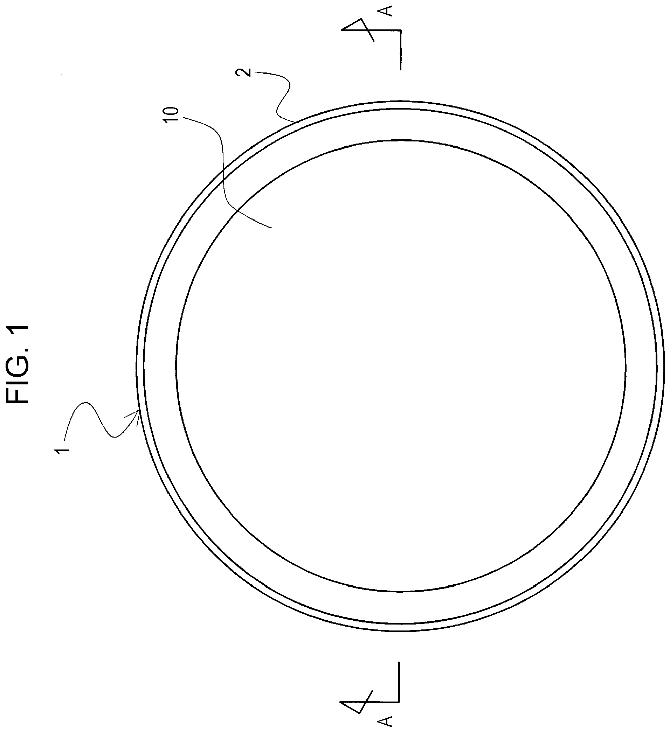

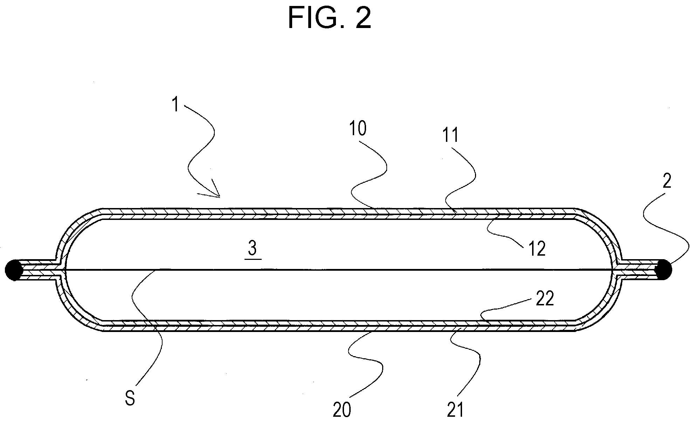

With reference to FIGS. 1 and 2, a diaphragm damper according to a first embodiment of the present invention will be described.

A diaphragm damper according to the present invention is used in a high-pressure pump that pressurizes fuel supplied from a fuel tank by the reciprocation of a plunger for force-feeding to the injector side.

In this type of high-pressure pump, a fuel chamber is formed on the fuel inlet side. By repeating a "suction process" where fuel is sucked from the fuel chamber into a compression chamber when the plunger descends, an "amount-adjustment process" where part of the fuel in the compression chamber is returned to the fuel chamber when the plunger ascends, and a "pressurization process" where the fuel is pressurized when the plunger further ascends after a suction valve is closed, the fuel is pressurized and discharged.

The diaphragm damper according to the present invention is used for reducing pulsations occurring in a fuel chamber of such a high-pressure pump.

FIG. 1 is a plan view of the diaphragm damper according to the first embodiment of the present invention. FIG. 2 is a cross-sectional view taken along A-A in FIG. 1, and shows a vertical cross section of the diaphragm damper.

For explanatory convenience, an upper side of the sheet surface of FIG. 2 is referred to as an upper side of the diaphragm damper, and a lower side of the sheet surface as a lower side of the diaphragm damper.

In FIGS. 1 and 2, a diaphragm damper 1 mainly includes an upper diaphragm 10 and a lower diaphragm 20. The couple of diaphragms 10 and 20 are formed vertically symmetrically with respect to a joint plane S, and are joined to each other at outer edge portions 2 by welding or the like, forming an internal space 3 in which high-pressure gas is sealed.

The upper diaphragm 10 and the lower diaphragm 20 are each formed of a disk-shaped metal thin film. At least one of the diaphragms 10 and 20 is formed in a multilayer structure with a plurality of metal thin films layered and fixed at its outer edge portion 2 by welding or the like.

Examples of metal used for the thin films include stainless steel and the like.

The thickness of the thin films is set in a range of about 0.1 mm to 0.5 mm when the outer diameter of the diaphragms is 30 mm to 50 mm.

In the diaphragm damper 1 shown in FIGS. 1 and 2, the upper diaphragm 10 has a multilayer structure with two metal thin films 11 and 12 layered and fixed only at its outer edge portion 2 by welding or the like. Likewise, the lower diaphragm 20 has a multilayer structure with two metal thin films 21 and 22 layered and fixed only at its outer edge portion 2 by welding or the like.

The two metal thin films 11 and 12 of the upper diaphragm 10 and the two metal thin films 21 and 22 of the lower diaphragm 20 are fixed only at the outer edge portions 2 by welding or the like, and are not fixed at portions other than the outer edge portions. Thus, the two metal thin films can move relatively to each other at portions other than the outer edge portion 2.

The number of the metal thin films in the multilayer structure is not limited to two, and may be three or more. It is essential only that the number is two or more, as a matter of course.

The present invention is not limited to the case where both the upper diaphragm 10 and the lower diaphragm 20 have the multilayer structure. Alternatively, one of them may have the multilayer structure.

In FIGS. 1 and 2, the two metal thin films 11 and 12 of the upper diaphragm 10 and the two metal thin films 21 and 22 of the lower diaphragm 20 are formed of the same type of metal, and have the same thickness.

Note that the two metal thin films may be formed of different types of metals and have different thicknesses. For example, the outside metal thin films 11 and 21 may be formed of a material with high corrosion resistance, and the thickness may be changed according to the spring constant of the material.

The present inventors have obtained findings that since a spring constant is proportional to the thickness t of a metal thin film raised to the third power, and for pressure resistance, diaphragms having the same overall thickness provide the same pressure resistance, by making a diaphragm in a multilayer structure with a plurality of metal thin films combined in layers, a diaphragm damper with a larger amount of change in volume than a diaphragm damper having diaphragms with a single-layer structure can be obtained even when the diaphragm with the multilayer structure has the same pressure resistance as the diaphragms with a single-layer structure.

Now, the spring constant and the pressure resistance (stress) of the diaphragms with a single-layer structure in Conventional Art 2 and the spring constant and the pressure resistance (stress) of the diaphragms 10 and 20 with the two-layer structure shown in FIG. 1 are considered. Suppose, for example, that the thickness of the metal thin film of each diaphragm with the single-layer structure is t, and the total thickness of the two layers of the metal thin films of each diaphragm with the two-layer structure is t (the thickness of one layer is t/2).

The spring constant k₁ of the diaphragm with the single-layer structure in Conventional Art 2 is k₁ ∝ t³, and
the spring constant k₂ of the diaphragm with the two-layer structure is k₂ ∝ (t/2)³ + (t/2)³.

Thus, the spring constant k₂ of the diaphragm with the two-layer structure is a quarter of the spring constant k₁ of the diaphragm with the single-layer structure, and the spring constant can be greatly reduced. Consequently, this can increase the amount of change in volume as the diaphragm damper, and can exert the damper function.

For the pressure resistance (stress), both diaphragms with single-layer structure and diaphragms with a multilayer structure have the same pressure resistance if their thicknesses t (total thickness for the multilayer structure) are the same.

The two metal thin films 11 and 12 of the upper diaphragm 10 and the two metal thin films 21 and 22 of the lower diaphragm 20 are fixed only at the outer edge portions 2 by welding or the like, and are not fixed at portions other than the outer edge portions. Thus the thin films of each diaphragm deform in the same manner without being hindered in deformation.

When the two metal thin films are formed of the same type of metal, the welding operation at the outer edge portion 2 is facilitated, and a good welded portion can be obtained.

When the two metal thin films have the same thickness, heat is input to the individual thin films in the same way during welding, resulting in a facilitated welding operation.

As described above, the diaphragm damper in the first embodiment achieves the following outstanding effects.
(1) In the diaphragm damper 1 including the couple of diaphragms 10 and 20 joined to each other at the outer edge portions 2, forming the internal space 3 in which high-pressure gas is sealed, the diaphragms 10 and 20 are each formed of the metal thin film, and at least one of the diaphragms 10 and 20 has the multilayer structure with the metal thin films 11 and 12 or 21 and 22 layered and fixed at its outer edge portion 2, so that when the diaphragm has the same pressure resistance as one with a single-layer structure, it can be greatly reduced in spring constant compared to the one with the single-layer structure, increasing the amount of change in volume as the diaphragm damper, and exerting the damper function sufficiently.
(2) The two metal thin films 11 and 12 or 21 and 22 are formed of the same type of metal, so that the welding operation at the outer edge portion 2 is facilitated, and a good welded portion can be obtained.
(3) The two metal thin films have the same thickness, so that heat can be input to the individual thin films in the same way during welding, and the welding operation can be facilitated.

### Second Embodiment

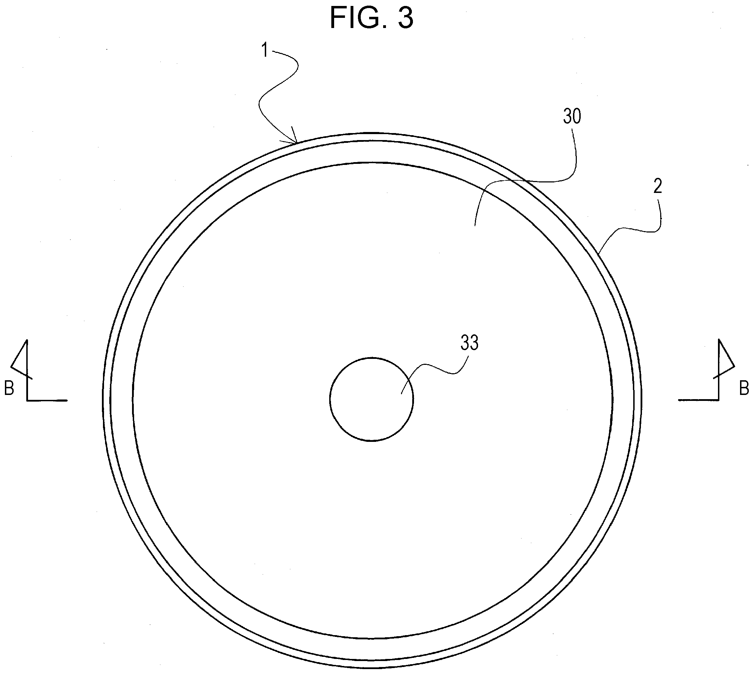

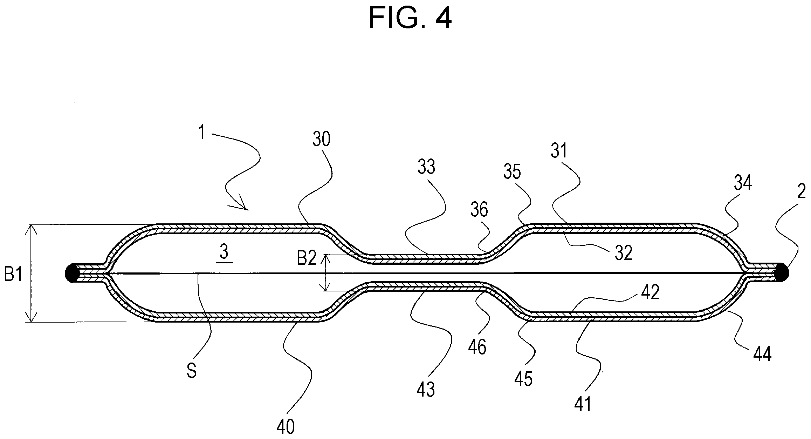

With reference to FIGS. 3 and 4, a diaphragm damper according to a second embodiment of the present invention will be described.

The diaphragm damper according to the second embodiment is different from that in the first embodiment in its cross-sectional shape, but is identical to that in the first embodiment in the other basic configuration, and will not be redundantly explained.

In a diaphragm damper 1 shown in FIGS. 3 and 4, an upper diaphragm 30 has a multilayer structure with two metal thin films 31 and 32 layered and fixed only at its outer edge portion 2 by welding or the like. Likewise, a lower diaphragm 40 has a multilayer structure with two metal thin films 41 and 42 layered and fixed only at its outer edge portion 2 by welding or the like.

The two metal thin films 31 and 32 of the upper diaphragm 30 and the two metal thin films 41 and 42 of the lower diaphragm 40 are fixed only at the outer edge portions 2 by welding or the like, and are not fixed at portions other than the outer edge portions. Thus, the two metal thin films can move relatively to each other at portions other than the outer edge portion 2.

As shown in FIG. 4, the diaphragm damper 1 according to the second embodiment is characterized in being set in a cross-sectional shape in which the upper diaphragm 30 and the lower diaphragm 40 are formed vertically symmetrically with respect to a joint plane S, with respective central portions 33 and 43 depressed compared to the radially outer sides, forming a recess, and the distance between the upper diaphragm 30 and the lower diaphragm 40 (also referred to as a diaphragm width) is smaller at the central portions 33 and 43 than at the radially outer sides, that is, in the so-called dumbbell-shaped cross-sectional shape.

The upper diaphragm 30 and the lower diaphragm 40 have respective radially outer shoulders 34 and 44, outside shoulders 35 and 45 of the central portions 33 and 43, and inside shoulders 36 and 46 of the central portion 33, formed in an R shape.

Now, reference numeral B1 denotes the distance at the radially outer sides between the diaphragms 30 and 40, and reference numeral B2 denotes the distance at the central portions 33 and 40 between the diaphragms 30 and 40. In a state where no external pressure acts on the diaphragm damper 1, B1/B2 is set to about 2 to 5. The distance B2 at the central portions 33 and 43 between the diaphragms 30 and 40 is set such that the upper diaphragm 30 and the lower diaphragm 40 do not come into contact with each other at the central portions 33 and 43 in a normal operating range of the diaphragm damper 1, and come into contact with each other under a high external pressure.

When the upper diaphragm 30 and the lower diaphragm 40 come into contact with each other at the central portions 33 and 43 under a high external pressure, stresses on the respective radially outer shoulders 34 and 44 of the upper diaphragm 30 and the lower diaphragm 40 decrease. Thus, the radially outer shoulders 34 and 44 can be prevented from being broken by the stresses even if a high external pressure acts on the diaphragm damper 1.

As described above, the diaphragm damper in the second embodiment achieves the following outstanding effects.
(1) In the diaphragm damper 1 including the couple of diaphragms 30 and 40 joined to each other at the outer edge portions 2, forming the internal space 3 in which high-pressure gas is sealed, the diaphragms 30 and 40 are each formed of the metal thin film, and at least one of the diaphragms 30 and 40 has the multilayer structure with the metal thin films 31 and 32 or 41 and 42 layered and fixed at its outer edge portion 2, so that when the diaphragm has the same pressure resistance, it can be greatly reduced in spring constant, increasing the amount of change in volume as the diaphragm damper, and exerting the damper function sufficiently.
(2) The two metal thin films 31 and 32 or 41 and 42 are formed of the same type of metal, so that the welding operation at the outer edge portion 2 is facilitated, and a good welded portion can be obtained.
(3) The two metal thin films have the same thickness, so that heat can be input to the individual thin films in the same way during welding, and the welding operation can be facilitated.
(4) In the vertical cross-sectional shape of the diaphragm damper 1, the distance between the couple of diaphragms 30 and 40 is smaller at the central portions 33 and 43 than at the radially outer sides, so that the radially outer shoulders 34 and 44 can be prevented from being broken by stresses even if a high external pressure acts on the diaphragm damper 1.

Although the embodiments of the present invention have been described above with reference to the drawings, its specific configuration is not limited to these embodiments. Any changes and additions made without departing from the scope of the present invention are included in the present invention.

For example, the above embodiments have described the case where the number of metal thin films in the multilayer structure is two, but the present invention is not limited to two, and the number may be three or more. It is essential only that the number is two or more.

Further, for example, the above embodiments have described the case where both the upper diaphragm and the lower diaphragm have the multilayer structure including the two metal thin films, but the present invention is not limited to this. Alternatively, one of them may have the multilayer structure.

Further, for example, the above embodiments have described the case where the upper diaphragm and the lower diaphragm are formed vertically symmetrically with respect to the joint plane, but the present invention is not limited to this. They may be vertically asymmetrical.

### Reference Signs List

1 diaphragm damper
2 outer edge portion
3 internally formed space
10 upper diaphragm
11, 12 metal thin film
20 lower diaphragm
21, 22 metal thin film
30 upper diaphragm
31, 32 metal thin film
33 central portion
34 outside diameter-side shoulder
35 outside shoulder of central portion
36 inside shoulder of central portion
40 lower diaphragm
41, 42 metal thin film
43 central portion
44 radially outer shoulder
45 outside shoulder of central portion
46 inside shoulder of central portion
S joint plane
B1 distance at radially outer sides between diaphragms
B2 distance at central portions between diaphragms

## Claims

1. A diaphragm damper comprising a couple of diaphragms joined to each other at outer edge portions, forming an internal space in which high-pressure gas is sealed, wherein
the diaphragms are each formed of a metal thin film, and
at least one of the diaphragms has a multilayer structure with a plurality of metal thin films layered and fixed at the outer edge portion thereof.

2. The diaphragm damper according to claim 1, wherein the plurality of metal thin films is formed of the same type of metal.

3. The diaphragm damper according to claim 1 or 2, wherein the plurality of metal thin films has the same thickness.

4. The diaphragm damper according to any one of claims 1 to 3, wherein the diaphragm damper has a vertical cross-sectional shape in which a distance between the couple of diaphragms is smaller at central portions than at radially outer sides.
